# EUROPEAN PATENT SPECIFICATION

(11) **EP 3 036 427 B1**
(45) Date of publication and mention of the grant of the patent: **04.10.2017**
(21) Application number: 14758156.5
(22) Date of filing: 15.08.2014
(51) Int. Cl.: F02M 43/00, F02D 19/06, F02D 41/00

(54) **FUEL INJECTION SYSTEM AND METHOD FOR OPERATING A MULTI-FUEL PISTON ENGINE**
KRAFTSTOFFEINSPRITZSYSTEM UND VERFAHREN ZUM BETRIEB EINER MEHRKRAFTSTOFF-KOLBENMASCHINE
SYSTÈME D'INJECTION DE CARBURANT ET PROCÉDÉ D'EXPLOITATION D'UN MOTEUR À PISTONS POLYCARBURANT

(30) Priority: 20.08.2013 FI 20135845
(43) Date of publication of application: 29.06.2016
(73) Proprietor: Wärtsilä Finland Oy, 65380 Vaasa (FI)
(72) Inventor: PORTIN, Kaj, FI-65100 Vaasa (FI); MALMIMÄKI, Tapio, FI-65100 Vaasa (FI)
(74) Representative: Berggren Oy, Helsinki & Oulu
(86) International application number: PCT/FI2014/050630
(87) International publication number: WO 2015/025079

(56) References cited:
- EP-A1- 2 009 277
- EP-A1- 2 562 399
- DE-A1-102009 000 894
- US-A1- 2012 048 242

## Description

### Technical field of the invention

The present invention relates to a fuel injection system for a piston engine in accordance with the preamble of claim 1. The invention also concerns a method for operating a multi-fuel piston engine, as defined in the preamble of the other independent claim.

### Background of the invention

An effective solution for reducing emissions and lowering operating costs of large internal combustion engines both in ships and at power plants are so called dual or tri-fuel engines, which can be operated both on gaseous and liquid fuel. These multi-fuel engines offer the flexibility to choose the most suitable fuel according to the availability and price of different fuels and/or emission limits that are in force in a certain place or at a certain time. For instance, a ship engine can be operated on gaseous fuel in areas where strict emission limits are applied and on heavy fuel oil elsewhere. In sophisticated engines the switch from distillate grade liquid fuel, such as light fuel oil (LFO) to gaseous fuel can be made automatically and almost instantly at full load. However, direct switch from residual fuel, such as heavy fuel oil (HFO), to gaseous fuel is not possible. An intermediate phase with LFO operation is required between the HFO and gas operation, and the transition from to HFO to LFO may take as long as half an hour. This is because the viscosity of HFO is high and the HFO may cause clogging of the components of the fuel injection system, if the system is not cleaned with LFO before the transition to the gas mode.

### Summary of the invention

An object of the present invention is to provide for a piston engine an improved fuel injection system, which aims to solve the above mentioned problems. The characterizing features of the fuel injection system according to the invention are given in the characterizing part of claim 1. Another object of the invention is to provide an improved method for operating a multi-fuel piston engine, which can be operated in a liquid fuel mode using liquid fuel and in a gas mode using gaseous fuel and liquid pilot fuel, and comprises a first fuel circuit for injecting liquid fuel and a second fuel circuit for injecting liquid pilot fuel into the cylinders of the engine, the first fuel circuit comprising for each cylinder at least one fuel injection pump and at least one fuel injector, and the second fuel circuit being provided with at least one high-pressure pump and comprising for each cylinder of the engine at least one pilot fuel injector. The characterizing features of the operating method are given in the characterizing part of the other independent claim.

The fuel injection system according to the invention comprises a first fuel circuit for injecting liquid fuel and a second fuel circuit for injecting liquid pilot fuel into the cylinders of the engine, the first fuel circuit comprising for each cylinder at least one fuel injection pump and at least one fuel injector, and the second fuel circuit being provided with at least one high-pressure pump and comprising for each cylinder of the engine at least one pilot fuel injector. The fuel injection system comprises means for introducing liquid pilot fuel from the second fuel circuit into the first fuel circuit between the fuel injection pumps and the fuel injectors.

In the method according to the invention, before a transition from the liquid fuel mode to the gas mode, liquid pilot fuel is introduced from the second fuel circuit into the first fuel circuit between the fuel injection pumps and the fuel injectors.

With the fuel injection system and method according to the invention, the fuel injection pumps and the fuel injectors of the engine can be flushed with a better quality fuel before a planned transition from the liquid fuel mode to the gas mode when residual fuel has been used. This prevents clogging of the fuel injectors and enables quicker change of the operation mode. The use of different fuels can thus be better optimized, which helps to reduce operating costs of the engine.

According to the invention, the means for introducing liquid pilot fuel into the first fuel circuit comprise a connecting duct, a feed valve and a throttle, which is arranged downstream from the feed valve. With the feed valve the feeding of the pilot fuel into the first fuel circuit can be limited to a time period just before the transition to the gas mode. The throttle can be used for regulating the amount of pilot fuel that is introduced into the first fuel circuit.

The fuel injection system can be further provided with check valves that are arranged between the throttle and the first fuel circuit for preventing flow from the first fuel circuit into the second fuel circuit. The check valves also prevent fuel flow from one fuel injector to another fuel injector.

### Brief description of the drawings

Embodiments of the invention are described below in more detail with reference to the accompanying drawings, in which
Fig. 1 shows a simplified illustration of a fuel injection system for liquid fuel in a piston engine, and
Fig. 2 shows a fuel system for gaseous fuel.

### Description of embodiments of the invention

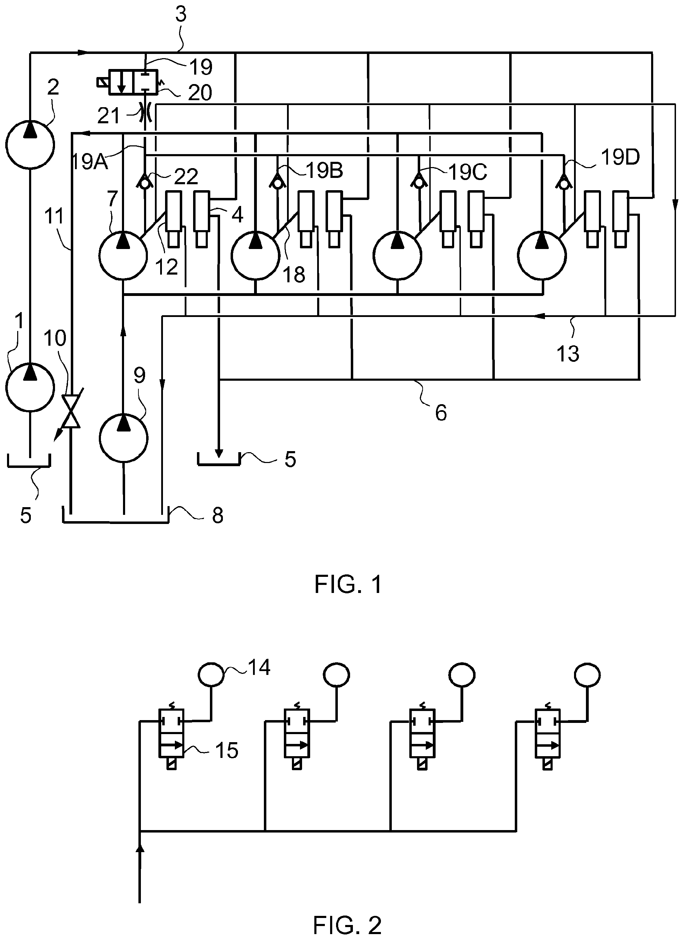

In figure 1 is shown schematically a fuel injection system for liquid fuel in a multi-fuel piston engine. Figure 2 shows for the same engine a fuel system for gaseous fuel. The engine is a large internal combustion engine, such as a main or an auxiliary engine of a ship or an engine that is used at a power plant for producing electricity. The engine can comprise any reasonable number of cylinders, which can be arranged, for instance, in line or in a V-configuration. The engine can be selectively operated on gaseous fuel or liquid fuel. The liquid fuel can be, for instance, heavy fuel oil (HFO), light fuel oil (LFO) or marine diesel fuel (MDF). The gaseous fuel can be, for instance, natural gas or biogas. The gas is introduced into the intake duct of the engine. In the gas mode, a small amount of liquid pilot fuel is used for igniting the gaseous fuel. The amount of the pilot fuel is less than one percent of the full load fuel consumption. The pilot fuel should be of distillate fuel grade, such as LFO or MDF. The so called lean burn principle is used in the gas mode. The mixture of the air and gas in the combustion chamber contains thus more air than is needed for complete combustion. Lean combustion reduces peak temperatures and therefore NOx emissions. Efficiency is increased and higher output is reached while avoiding knocking. Combustion of the lean air-fuel mixture is initiated by injecting a small amount of the liquid pilot fuel into the cylinder. The pilot fuel is ignited in a conventional diesel process, providing a high-energy ignition source for the main charge. To obtain the best efficiency and lowest emissions, every cylinder is individually controlled to ensure operation at the correct air-fuel ratio and with the correct amount and timing of pilot fuel injection.

In figure 2 is shown schematically a fuel system for the gaseous fuel. Each cylinder 14 of the engine is provided with a gas admission valve 15, through which the gaseous fuel can be introduced into the intake duct of the cylinder 14. The gas admission valve 15 is controlled electrically. The gas admission valve 15 of each cylinder 14 can be controlled independently of the intake valve. The gas is mixed with the intake air upstream from the intake valve in the cylinder head. Instead of the intake duct, the gas could also be introduced into a precombustion chamber.

The fuel injection system of the engine comprises a first fuel circuit for main liquid fuel and a second fuel circuit for liquid pilot fuel. The main liquid fuel, which is used when the engine is operated solely on liquid fuel, is injected into the cylinders 14 by means of conventional fuel injection pumps 7. The pilot fuel is injected into the cylinders 14 by a common rail system.

The common rail system for the pilot fuel injection comprises a pilot fuel supply pump 1, which delivers pilot fuel from a pilot fuel tank 5 to a high-pressure pump 2 at a relatively low pressure. The pressure of the pilot fuel is increased by the high-pressure pump 2, from which the pilot fuel is introduced into a fuel rail 3, which works as a pressure accumulator. From the fuel rail 3, the pressurized fuel is fed to pilot fuel injectors 4. Each cylinder 14 of the engine is provided with at least one pilot fuel injector 4, which is part of the common rail circuit. The common rail system could also be provided with several high-pressure pumps 2 and fuel rails 3. For instance, in a V-engine each cylinder bank could be provided with an own high-pressure pump 2 and a fuel rail 3. It is also possible that there is one high-pressure pump 2 and a fuel rail 3 for two cylinders 14 or a few cylinders 14. It is even possible to provide each cylinder 14 with an own pressure accumulator, in which case the fuel rail 3 can be replaced by a fuel supply pipe delivering the fuel from the high-pressure pump 2 to the pilot fuel injectors 4. The pilot fuel injectors 4 are individually controlled.

The control can be, for instance, electrical. Each pilot fuel injector 4 is connected to a return line 6, through which the excess pilot fuel is returned to the pilot fuel tank 5.

The pilot fuel injection through the common rail system is used even when the engine is operated on liquid fuel. The pilot fuel injection is needed for controlling the temperature of the pilot fuel injector 4 and for preventing clogging of the pilot fuel injector 4. The engine can also be run for a short time in a backup mode without the pilot fuel injection, but a longer operation in the backup mode can lead to clogging of the pilot fuel injectors 4.

When the engine is operated on liquid fuel, the fuel is introduced into the cylinders 14 of the engine by means of conventional fuel injection pumps 7. Each cylinder 14 of the engine is provided with an own fuel injection pump 7. The fuel is delivered from the fuel tank 8 to the fuel injection pumps 7 by means of a fuel supply pump 9. From each fuel injection pump 7, the fuel is supplied to a fuel injector 12 of the respective cylinder 14 through a feed pipe 18. The pilot fuel injector 4 and the main fuel injector 12 can be integrated into a common injector unit. The fuel that is not supplied to the fuel injectors 12 is collected into the return line 11 of the fuel injection pumps 7, which conducts the fuel back into the fuel tank 8. The return line 11 is provided with a pressure control valve 10, which maintains the pressure in the return line 11 at the desired level. Clean leaking fuel from the fuel injectors 12 and the feed pipes 18 is collected into a leak line 13. In the liquid fuel mode, the engine can be operated both on distillate grade fuels and residual fuels.

A problem with multi-fuel engines has been that an instant switch-over from operation on residual fuel to operation on gaseous fuel has not been possible, but operation on distillate fuel, such as LFO, has been needed between the operation on residual fuel, such as HFO, and gaseous fuel. For enabling quicker or instant change from the gas mode to operation on residual fuel, the fuel injection system is provided with means for introducing liquid pilot fuel from the second fuel circuit into the first fuel circuit between the fuel injection pumps 7 and the fuel injectors 12. The means comprise a connecting duct 19, a feed valve 20 and a throttle 21, which is arranged downstream from the feed valve 20. The connecting duct 19 comprises a branch 19A, 19B, 19C, 19D for each cylinder 14 of the engine. Each branch 19A, 19B, 19C, 19D of the connecting duct 19 is connected to the feed pipe 18 between the fuel injection pump 7 and the fuel injector 12. The branches 19A, 19B, 19C, 19D of the connecting duct 19 are provided with check valves 22, which prevent flow from the first fuel circuit into the second fuel circuit and also from one fuel injector 12 to another fuel injector 12. In the embodiment of figure 1, the connecting duct 19 is connected to the fuel rail 3, but the connecting duct 19 could also be connected to some other part of the second fuel circuit downstream from the high-pressure pump 2.

When the engine is operated in the gas mode, the feed valve 20 is closed. The feed valve 20 is also closed during the normal operation on residual fuel. However, before a planned switch-over from the use of residual fuel to the use of gaseous fuel, the feed valve 20 is opened. Because the pressure in the second fuel circuit is higher than the pressure in the first fuel circuit, liquid pilot fuel can flow from the second fuel circuit into the first fuel circuit. The amount of the pilot fuel flowing into the first fuel circuit can be controlled by the throttle 21, which can be adjustable. It is also possible that instead of the single throttle 21, the fuel injection system is provided with an own throttle for each cylinder 14 of the engine, in which case the throttles are arranged in the branches 19A, 19B, 19C, 19D of the connecting duct 19. Between the working strokes of the fuel injection pump 7, the pilot fuel can flow from the feed pipe 18 through the constant pressure valve of the fuel injection pump 7 into the pressure chamber of the pump 7. During the next working stroke, the pilot fuel flows to the fuel injector 12. The fuel injectors 12 of the engine are thus filled with the pilot fuel after a few injection cycles. The pilot fuel prevents clogging of the fuel injectors 12, and the transition from the operation on residual fuel to the gas mode can be done quicker without lengthy operation on distillate grade fuel between the use of residual fuel and gaseous fuel.

It will be appreciated by a person skilled in the art that the invention is not limited to the embodiments described above, but may vary within the scope of the appended claims.

## Claims

1. A fuel injection system for a multi-fuel piston engine, which engine can be operated in a liquid fuel mode using liquid fuel and in a gas mode using gaseous fuel and liquid pilot fuel, the fuel injection system comprising a first fuel circuit for injecting liquid fuel and a second fuel circuit for injecting liquid pilot fuel into the cylinders (14) of the engine, the first fuel circuit comprising for each cylinder (14) at least one fuel injection pump (7) and at least one fuel injector (12), and the second fuel circuit being provided with at least one high-pressure pump (2) and comprising for each cylinder (14) of the engine at least one pilot fuel injector (4), **characterized in that** the fuel injection system comprises means (19, 20) for introducing liquid pilot fuel from the second fuel circuit into the first fuel circuit between the fuel injection pumps (7) and the fuel injectors (12) and that the means for introducing liquid pilot fuel into the first fuel circuit comprise a connecting duct (19), a feed valve (20) and a throttle (21), which is arranged downstream from the feed valve (20).

2. A fuel injection system according to claim 1, **characterized in that** the fuel injection system is provided with check valves (22) that are arranged between the throttle (21) and the first fuel circuit for preventing flow from the first fuel circuit into the second fuel circuit.

3. A method for operating a multi-fuel piston engine, which engine can be operated in a liquid fuel mode using liquid fuel and in a gas mode using gaseous fuel and liquid pilot fuel, the engine comprising a first fuel circuit for injecting liquid fuel and a second fuel circuit for injecting liquid pilot fuel into the cylinders (14) of the engine, the first fuel circuit comprising for each cylinder (14) at least one fuel injection pump (7) and at least one fuel injector (12), and the second fuel circuit being provided with at least one high-pressure pump (2) and comprising for each cylinder (14) of the engine at least one pilot fuel injector (4), **characterized in that** before a transition from the liquid fuel mode to the gas mode, liquid pilot fuel is introduced from the second fuel circuit into the first fuel circuit between the fuel injection pumps (7) and the fuel injectors (12), that a feed valve (20) is used for opening and closing flow communication between the second fuel circuit and the first fuel circuit and that the amount of the pilot fuel in the first fuel circuit is controlled by a throttle (21).

## Patentansprüche

1. Kraftstoffeinspritzsystem für einen Mehrkraftstoffkolbenmotor, wobei der Motor in einem Flüssigkraftstoffmodus unter Verwendung von flüssigem Kraftstoff und in einem Gasmodus unter Verwendung von gasförmigem Kraftstoff und flüssigem Pilotkraftstoff betrieben werden kann, wobei das Kraftstoffeinspritzsystem einen ersten Kraftstoffkreis zum Einspritzen von flüssigem Kraftstoff und einen zweiten Kraftstoffkreis zum Einspritzen von flüssigem Pilotkraftstoff in die Zylinder (14) des Motors umfasst, wobei der erste Kraftstoffkreis für jeden Zylinder (14) mindestens eine Kraftstoffeinspritzpumpe (7) und mindestens eine Kraftstoffdüse (12) umfasst und der zweite Kraftstoffkreis mit mindestens einer Hochdruckpumpe (2) versehen ist und für jeden Zylinder (14) des Motors mindestens eine Piloteinspritzdüse (4) umfasst, **dadurch gekennzeichnet, dass** das Kraftstoffeinspritzsystem Mittel (19, 20) zum Einleiten von flüssigem Pilotkraftstoff vom zweiten Kraftstoffkreis in den ersten Kraftstoffkreis zwischen den Kraftstoffeinspritzpumpen (7) und den Einspritzdüsen (12) umfasst und dass die Mittel zum Einleiten von flüssigem Pilotkraftstoff in den ersten Kraftstoffkreis einen Verbindungskanal (19), ein Zuführventil (20) und eine Drossel (21), die stromabwärts vom Zuführventil (20) angeordnet ist, umfassen.

2. Kraftstoffeinspritzsystem nach Anspruch 1, **dadurch gekennzeichnet, dass** das Kraftstoffeinspritzsystem mit Sperrventilen (22) versehen ist, die zum Verhindern des Flusses vom ersten Kraftstoffkreis in den zweiten Kraftstoffkreis zwischen der Drossel (21) und dem ersten Kraftstoffkreis angeordnet sind.

3. Verfahren zum Betreiben eines Mehrkraftstoffkolbenmotors, wobei der Motor in einem Flüssigkraftstoffmodus unter Verwendung von flüssigem Kraftstoff und in einem Gasmodus unter Verwendung von gasförmigem Kraftstoff und flüssigem Pilotkraftstoff betrieben werden kann, wobei der Motor einen ersten Kraftstoffkreis zum Einspritzen von flüssigem Kraftstoff und einen zweiten Kraftstoffkreis zum Einspritzen von flüssigem Pilotkraftstoff in die Zylinder (14) des Motors umfasst, wobei der erste Kraftstoffkreis für jeden Zylinder (14) mindestens eine Kraftstoffeinspritzpumpe (7) und mindestens eine Kraftstoffdüse (12) umfasst und der zweite Kraftstoffkreis mit mindestens einer Hochdruckpumpe (2) versehen ist und für jeden Zylinder (14) des Motors mindestens eine Piloteinspritzdüse (4) umfasst, **dadurch gekennzeichnet, dass** vor einem Übergang vom Flüssigkraftstoffmodus zum Gasmodus zwischen den Kraftstoffeinspritzpumpen (7) und den Einspritzdüsen (12) flüssiger Pilotkraftstoff vom zweiten Kraftstoffkreis in den ersten Kraftstoffkreis eingeleitet wird, dass ein Zuführventil (20) zum Öffnen und Schließen der Fließverbindung zwischen dem zweiten Kraftstoffkreis und dem ersten Kraftstoffkreis verwendet wird und dass die Menge des Pilotkraftstoffs im ersten Kraftstoffkreis von einer Drossel (21) gesteuert wird.

## Revendications

1. Système d'injection de carburant pour un moteur à pistons polycarburant, lequel moteur peut être exploité dans un mode de carburant liquide utilisant du carburant liquide et dans un mode gazeux utilisant du carburant gazeux et du carburant pilote liquide, le système d'injection de carburant comprenant un premier circuit de carburant pour injecter du carburant liquide et un second circuit de carburant pour injecter du carburant pilote liquide dans les cylindres (14) du moteur, le premier circuit de carburant comprenant pour chaque cylindre (14) au moins une pompe d'injection de carburant (7) et au moins un injecteur de carburant (12) et le second circuit de carburant étant doté d'au moins une pompe haute pression (2) et comprenant pour chaque cylindre (14) du moteur au moins un injecteur de carburant pilote (4), **caractérisé en ce que** le système d'injection de carburant comprend des moyens (19, 20) pour introduire du carburant pilote liquide du second circuit de carburant vers l'intérieur du premier circuit de carburant entre les pompes d'injection de carburant (7) et les injecteurs de carburant (12) et que les moyens pour introduire du carburant pilote liquide vers l'intérieur du premier circuit de carburant comprennent un conduit de connexion (19), une soupape d'alimentation (20) et un papillon (21) qui est agencé en amont de la soupape d'alimentation (20).

2. Système d'injection de carburant selon la revendication 1, **caractérisé en ce que** le système d'injection de carburant est doté de clapets anti-retour (22) qui sont agencés entre le papillon (21) et le premier circuit de carburant pour éviter l'écoulement du premier circuit de carburant vers l'intérieur du second circuit de carburant.

3. Procédé d'exploitation d'un système d'injection de carburant pour un moteur à pistons polycarburant, lequel moteur peut être exploité dans un mode de carburant liquide utilisant du carburant liquide et dans un mode gazeux utilisant du carburant gazeux et du carburant pilote liquide, le moteur comprenant un premier circuit de carburant pour injecter du carburant liquide et un second circuit de carburant pour injecter du carburant pilote liquide dans les cylindres (14) du moteur, le premier circuit de carburant comprenant pour chaque cylindre (14) au moins une pompe d'injection de carburant (7) et au moins un injecteur de carburant (12) et le second circuit de carburant étant doté d'au moins une pompe haute pression (2) et comprenant pour chaque cylindre (14) du moteur au moins un injecteur de carburant pilote (4), **caractérisé en ce qu'**avant une transition du mode de carburant liquide au mode gazeux, du carburant pilote liquide est introduit du second circuit de carburant vers l'intérieur du premier circuit de carburant entre les pompes d'injection de carburant (7) et les injecteurs de carburant (12), qu'une soupape d'alimentation (20) est employée pour ouvrir et fermer la communication fluidique entre le second circuit de carburant et le premier circuit de carburant et que la quantité de carburant pilote dans le premier circuit de carburant est commandée par un papillon (21).
